# EUROPEAN PATENT APPLICATION

(11) **EP 4 783 117 A1**
(43) Date of publication of application: **29.07.2026**
(21) Application number: 24917275.0
(22) Date of filing: 05.11.2024
(51) Int. Cl.: G06T 11/60, G06F 16/583, G06T 5/60, G06T 3/4053, G06N 3/0475

(54) **ELECTRONIC DEVICE AND METHOD FOR GENERATING IMAGE USING OBJECT INFORMATION**

(30) Priority: 12.01.2024 KR 20240005612; 21.02.2024 KR 20240024842
(71) Applicant: Samsung Electronics Co., Ltd., Suwon-si, Gyeonggi-do 16677 (KR)
(72) Inventor: YANG, Chulju, Suwon-si Gyeonggi-do 16677 (KR); KIM, Moonsoo, Suwon-si Gyeonggi-do 16677 (KR); NAM, Sungguk, Suwon-si Gyeonggi-do 16677 (KR); MUN, Jihun, Suwon-si Gyeonggi-do 16677 (KR); YOO, Nagyeom, Suwon-si Gyeonggi-do 16677 (KR)
(74) Representative: HGF
(86) International application number: PCT/KR2024/017225
(87) International publication number: WO 2025/150678

(57) **Abstract**

The present disclosure relates to a keyword-based electronic device and method using analyzed object information, capable of: displaying a first image corresponding to an original image in response to a user input; analyzing the first image to extract keywords; displaying a plurality of keywords in relation to an object included in the first image; receiving a selection of at least one keyword from among the plurality of keywords; and generating a second image corresponding to an artificial intelligence image by using an artificial intelligence model on the basis of at least a part of the selected keyword and at least a part of the first image.

## Description

### TECHNICAL FIELD

The following embodiments relate to technology for generating an image using object information.

### BACKGROUND ART

With the advancement of artificial intelligence technology, the field of image processing is also undergoing innovative changes. In particular, artificial intelligence images have become a prominent area within computer vision. Artificial intelligence images are generated through a computer's ability to interpret and understand images using machine learning and deep learning algorithms.

By generating a prompt using text and providing the prompt as an input, an artificial intelligence model may generate an image that corresponds to the prompt. Additionally, when a user designates a region where the user desires to generate an image and similarly provides a text-based prompt, the artificial intelligence model may insert the image generated by the artificial intelligence model to the designated region.

To edit a photo using a generative artificial intelligence model, a user first writes an intended outcome in text form to generate a prompt, which is then used to generate an image. At this stage, when the artificial intelligence model fails to interpret the prompt as the user intends, the resulting image may differ from the user's intention. The image may be generated strictly according to the input prompt without considering surrounding objects, which may result in an awkward image that does not harmonize with the surrounding objects.

### DISCLOSURE OF THE INVENTION

### TECHNICAL SOLUTIONS

An electronic device and method of generating an image using object information are proposed, according to an embodiment.

An electronic device according to an embodiment includes a display, memory, and a processor, wherein the processor may be configured to, in response to a user input, display, on the display, a first image corresponding to an original image, extract keywords by analyzing the first image, display a plurality of keywords related to an object included in the first image, receive at least one keyword that is selected from among the plurality of keywords, and based on at least a portion of the selected keyword and at least a portion of the first image, generate, using an artificial intelligence model, a second image corresponding to an artificial intelligence image.

A method of generating an artificial intelligence image according to an embodiment includes, in response to a user input, displaying a first image corresponding to an original image, extracting keywords by analyzing the first image, displaying a plurality of keywords related to an object included in the first image, receiving at least one keyword that is selected from among the plurality of keywords, and based on at least a portion of the selected keyword and at least a portion of the first image, generating, using an artificial intelligence model, a second image corresponding to an artificial intelligence image.

A method of generating an artificial image according to an embodiment facilitates generation of a new image by supplementing a deficient portion, emphasizing the impression of the image, or transforming the image, based on keywords corresponding to a scene, mood, or object information of the image

### BRIEF DESCRIPTION OF DRAWINGS

FIG. 1 is a diagram illustrating a schematic configuration of an electronic device, according to an embodiment.
FIG. 2 is a flowchart illustrating a schematic process of generating an artificial intelligence image, according to an embodiment.
FIG. 3 is a flowchart illustrating a process of generating an artificial intelligence image, according to an embodiment.
FIG. 4 is a diagram illustrating an example of generating an artificial intelligence image by selecting a keyword, according to an embodiment.
FIG. 5 is a diagram illustrating an example of generating an artificial intelligence image by changing a selected keyword, according to an embodiment.
FIG. 6 is a diagram illustrating an example of modifying an artificial intelligence image by loading a stored artificial intelligence image and changing a selected keyword, according to an embodiment.
FIG. 7 is a diagram illustrating an example of re-extracting a keyword to generate an artificial intelligence image, according to an embodiment.
FIG. 8 is a diagram illustrating an example of generating an artificial intelligence image using a preferred keyword, according to an embodiment.
FIG. 9 is a diagram illustrating an example of generating an artificial intelligence image by registering and using a preferred keyword, according to an embodiment.
FIG. 10 is a diagram illustrating an example of generating an artificial intelligence image using a keyword included in a past category, according to an embodiment.
FIG. 11 is a diagram illustrating an example of generating an artificial intelligence image using a keyword included in a future category, according to an embodiment.
FIG. 12 is a diagram illustrating a schematic configuration of an electronic device for generating an artificial intelligence image based on a keyword, according to an embodiment.
FIG. 13 is a block diagram of an electronic device in a network environment according to an embodiment.

### BEST MODE FOR CARRYING OUT THE INVENTION

Hereinafter, embodiments will be described in detail with reference to the accompanying drawings. However, various alterations and modifications may be made to the embodiments. Here, the embodiments are not meant to be limited by the descriptions of the disclosure. The embodiments should be understood to include all changes, equivalents, and replacements within the idea and the technical scope of the disclosure.

The terminology used herein is for the purpose of describing particular embodiments only and is not to be limiting of the embodiments. As used herein, the singular form is intended to include the plural forms as well, unless the context clearly indicates otherwise. It will be further understood that the terms "comprises/comprising" or "includes/including" when used herein, specify the presence of stated features, integers, steps, operations, elements, components, or groups thereof, but do not preclude the presence or addition of one or more other features, integers, steps, operations, elements, components, or groups thereof.

Unless otherwise defined, all terms including technical and scientific terms used herein have the same meaning as commonly understood by one of ordinary skill in the art to which the embodiments belong. Terms, such as those defined in commonly used dictionaries, are to be interpreted as having a meaning that is consistent with their meaning in the context of the relevant art and the present disclosure, and are not to be interpreted in an idealized or overly formal sense unless expressly so defined herein.

In addition, when describing the embodiments with reference to the accompanying drawings, like reference numerals refer to like components regardless of drawing numbers and a repeated description related thereto will be omitted. In the description of embodiments, detailed description of well-known related technology will be omitted when it is deemed that such description will cause ambiguous interpretation of the disclosure.

Also, in the description of the components, terms such as first, second, A, B, (a), (b) or the like may be used herein when describing components of the disclosure. These terms are used only for the purpose of discriminating one component from another component, and the nature, the sequences, or the orders of the components are not limited by the terms. When one component is described as being "connected," "coupled," or "attached" to another component, it should be understood that one component may be connected or attached directly to another component, and an intervening component may also be "connected," "coupled," or "attached" to the components.

Components included in an embodiment and components that have common functions will be described using the same names in other embodiments. Unless stated otherwise, the description of any one embodiment may be applied to other embodiments, and the specific description of the repeated configuration will be omitted.

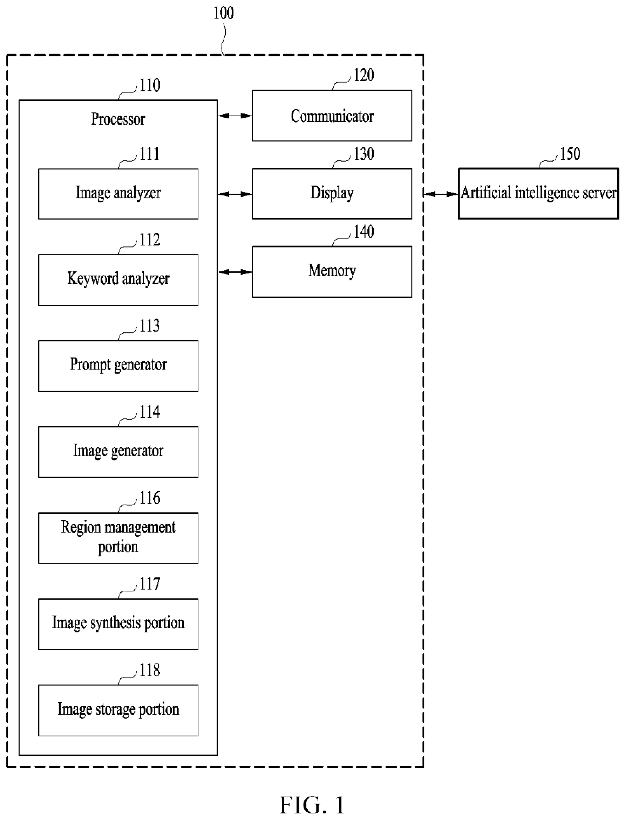

Hereinafter, a method and an apparatus for generating an image using object information, according to an embodiment of the present disclosure, are described in detail with reference to FIGS. 1 to 13.

FIG. 1 is a diagram illustrating a schematic configuration of an electronic device, according to an embodiment.

Referring to FIG. 1, an electronic device 100 may include a processor 110, a communicator 120, a display 130, and memory 140.

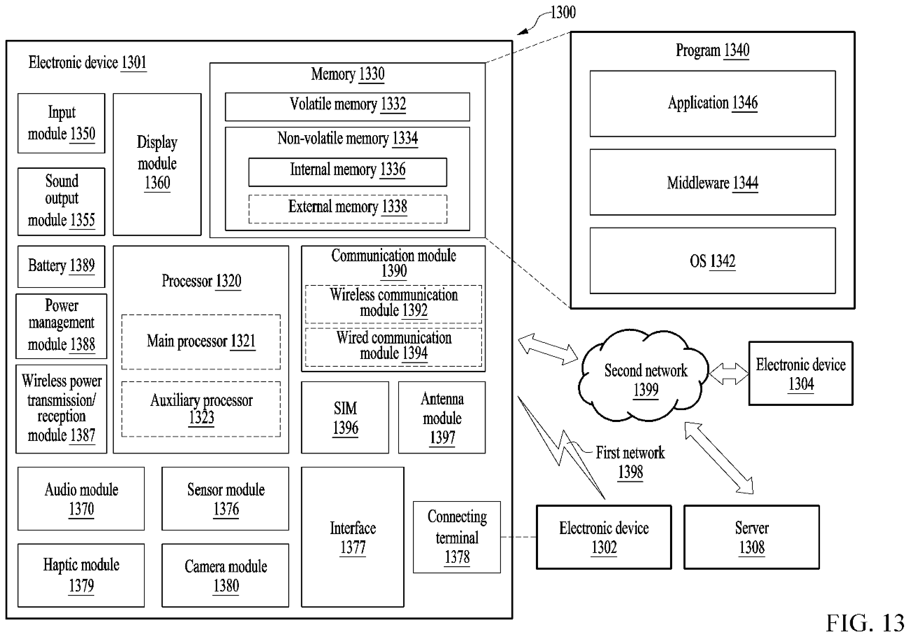

The communicator 120 may be a communication interface device including a receiver and a transmitter and may transmit and receive data by wire or wirelessly. The communicator 120 may communicate with an artificial intelligence server 150 that generates an artificial intelligence image. In this case, the communicator 120 may be a component corresponding to a communication module 1390 of FIG. 13, and the artificial intelligence server 150 may be a component corresponding to a server 1308 of FIG. 13.

The display 130 may display state information (or an indicator), limited numbers and characters, a moving picture, and a still picture, which are generated during an operation of the electronic device 100. In addition, in the disclosure, a preview image, at least one artificial intelligence graphic object, and an artificial intelligence image may be displayed.

The display 130 of the disclosure may be a touchscreen that may receive a touch input.

A touchscreen may include a display that performs a screen output function and a touch sensor that performs a touch input function. Such a touchscreen may have a structure in which a touch sensor is disposed on the front of the display. The display may be formed of a liquid crystal display (LCD), organic light emitting diodes (OLED), and the like. The touch sensor may perform a function of receiving a touch input such as a touch event, a double touch event, a touch move event, and a touch release event. That is, the touch sensor may generate a touch event when an object, for example, a finger of a user touches the touch sensor, and transmit the generated touch event to the processor 110. In addition, when the finger moves in a predetermined direction on the touch sensor while remaining in contact with the touch sensor, the touch sensor may generate a touch move event and transmit the touch move event to the processor 110. The touch move event may be divided into a flick event with a movement speed greater than or equal to a preset threshold and a drag event with a movement speed less than or equal to the threshold. Additionally, after a touch event or touch move event is generated, when the finger of the user moves away from the touch sensor, the touch sensor may generate a touch release event and transmit the touch release event to the processor 110. Such a touch sensor may be formed using a pressure-sensitive scheme, an infrared scheme, a capacitive scheme, or the like. Hereinafter, for ease of description, the display 130 is collectively referred to as a touchscreen. Here, the display 130 may be a component corresponding to a display module 1360 of FIG. 13.

The memory 140 may store an operating system (OS), an application program, and a storage data (compressed image, file, video, etc.) for controlling the overall operation of the electronic device 100. In addition, according to various embodiments of the disclosure, the memory 140 may store an original image (hereinafter, referred to as a "first image"), metadata of an image, information about a preferred keyword, accumulated information about a selected keyword, an artificial intelligence image (hereinafter, referred to as a "second image"), metadata of the artificial intelligence image, a final artificial intelligence image received from the artificial intelligence server 150 (hereinafter, referred to as a "third image"), and metadata of the final artificial intelligence image.

The processor 110 may be configured to include an image analyzer 111, a keyword analyzer 112, a prompt generator 113, an image generator 114, a region management portion 116, an image synthesis portion 117, and an image storage portion 118.

In this case, the image analyzer 111, the keyword analyzer 112, the prompt generator 113, the image generator 114, the region management portion 116, the image synthesis portion 117, and the image storage portion 118 may be stored in the memory 140 in the form of instructions.

The image analyzer 111 may extract each keyword by category by analyzing a first image, extract a keyword of an object included in the first image by analyzing the first image, and extract a keyword by analyzing the main scene and mood of a second image. In this case, keyword extraction may be performed by utilizing a transformer-based artificial intelligence deep learning model (e.g., a model such as Clip, blip, and Vit) that uses the first image as an input to extract a keyword in text form from the first image.

The keyword analyzer 112 may analyze, using an artificial intelligence model, the keywords obtained through the image analyzer 111, and determine, from among the extracted keywords, a keyword to be displayed corresponding to a scene, a mood, and an object having high relevance (priority). The keyword analyzer 112 may classify a keyword related to an object recognized in the first image around the recognized object and display the keyword on the display 130.

The keyword analyzer 112 may also display a registered preferred keyword together with a plurality of keywords on the display 130. In this case, a preferred keyword may be a keyword that is registered in advance and preferred by a user, a preset number of keywords selected in order of frequency among previously selected keywords, or a keyword that is selected more than a preset number of times among previously selected keywords.

When receiving a request for changing a plurality of displayed keywords, the keyword analyzer 112 may re-select a plurality of keywords to be displayed from the extracted keywords or may request the image analyzer 111 to extract keywords again and re-select a plurality of keywords to be displayed from the newly extracted keywords.

In this case, the keyword analyzer 112 may utilize a deep learning model such as a transformer and a convolutional neural network (CNN).

The prompt generator 113 may generate a prompt to be used in generative artificial intelligence by utilizing a keyword selected by the user from among the plurality of keywords obtained through the keyword analyzer 112 and image data as needed. The prompt generator 113 may, depending on the category of a selected keyword, obtain the first image and data in text form from the artificial intelligence server 150 or data from the memory 140 of the electronic device 100 and use the data to generate a prompt. In this case, the prompt generator 113 may utilize a deep learning model that is trained for the corresponding purpose and is based on a transformer and the like.

Using generative artificial intelligence, the image generator 114 may generate an image that matches a selected keyword using the prompt generated by the prompt generator 113 as an input.

The region management portion 116 may estimate depth data of each object based on image information and may estimate region data by analyzing a region for each keyword in an image.

Using the image generated by the image generator 114 and the depth data and the region data estimated through the region management portion 116, the image synthesis portion 117 may generate a second image, which is an artificial intelligence image, by synthesizing the first image with an image generated by the image generator 114 through keywords.

The image synthesis portion 117 may request the artificial intelligence server 150 to generate a final second image through the communicator 120 and receive a third image corresponding to a final artificial intelligence image from the artificial intelligence server 150. In this case, the received third image may have a higher resolution than the second image generated through the image synthesis portion 117.

The image storage portion 118 may perform control to store the second image or the third image in the memory 140.

In this case, the image storage portion 118 may perform control to store metadata of the second image together with the second image. In this case, the metadata of the second image may include at least one of information about the first image, which is source data used to generate the second image (for example, the metadata information of the first image may include information regarding the time at which the first image is captured, information regarding the location at which the first image is captured, information regarding the owner of the first image, and information regarding the size of the first image), information regarding an object included in the first image, extracted keywords, a plurality of displayed keywords, a selected keyword, and information regarding a category corresponding to each keyword.

The processor 110 may control the overall operation of the electronic device 100. In addition, the processor 110 may perform functions of the image analyzer 111, the keyword analyzer 112, the prompt generator 113, the image generator 114, the region management portion 116, the image synthesis portion 117, and the image storage portion 118. The image analyzer 111, the keyword analyzer 112, the prompt generator 113, the image generator 114, the region management portion 116, the image synthesis portion 117, and the image storage portion 118 are illustrated separately in order to describe respective functions separately. Therefore, the processor 110 may include at least one processor configured to perform the respective functions of the image analyzer 111, the keyword analyzer 112, the prompt generator 113, the image generator 114, the region management portion 116, the image synthesis portion 117, and the image storage portion 118. In addition, the processor 110 may include at least one processor configured to perform some of the respective functions of the image analyzer 111, the keyword analyzer 112, the prompt generator 113, the image generator 114, the region management portion 116, the image synthesis portion 117, and the image storage portion 118. In this case, the processor 110 may be a component corresponding to a processor 1380 of FIG. 13.

Hereinafter, a method according to the disclosure configured as described above is described below with reference to the drawings.

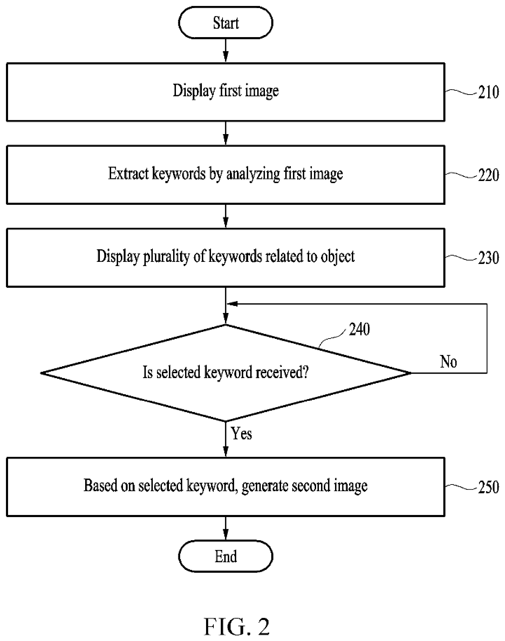

FIG. 2 is a flowchart illustrating a schematic process of generating an artificial intelligence image, according to an embodiment.

Referring to FIG. 2, in operation 210, in response to a user input, the electronic device 100 may display a first image, which is an original image for generating an artificial intelligence image.

Then, in operation 220, the electronic device 100 may extract keywords by analyzing the first image and metadata of the first image.

Then, in operation 230, the electronic device 100 may display a plurality of keywords related to an object included in the first image by overlaying the plurality of keywords on the object corresponding to the plurality of keywords of the first image or displaying the plurality of keywords around the object.

Then, in operation 240, when receiving a selected keyword to be used for generating a second image, which is an artificial intelligence image, from among the plurality of keywords, in operation 250, the electronic device 100 may generate a second image, which is an artificial intelligence image, based on at least a portion of the selected keyword and at least a portion of an image. In this case, in operation 250, with respect to the selection of a keyword to be used to generate the second image, it may be possible to determine which keyword is selected from among the plurality of keywords by detecting a user input through a touchscreen.

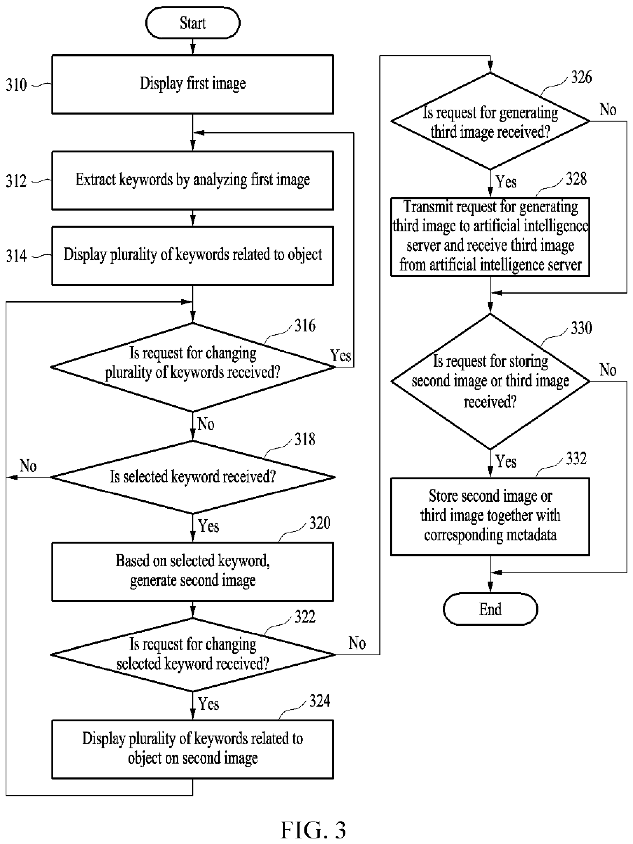

FIG. 3 is a flowchart illustrating a process of generating an artificial intelligence image, according to an embodiment.

Referring to FIG. 3, in operation 310, in response to a user input, the electronic device 100 may display a first image, which is an original image for generating an artificial intelligence image.

Then, in operation 312, the electronic device 100 may extract keywords by analyzing the first image.

In operation 312, the electronic device 100 may extract keywords by analyzing metadata of the first image in addition to the first image. In this case, the metadata of the first image may include at least one of information regarding the time at which the first image is captured, information regarding the location at which the first image is captured, information regarding the owner of the first image, and information regarding the size of the first image.

In operation 312 according to an embodiment, the electronic device 100 may identify and recognize at least one object included in the first image and extract at least one keyword corresponding to the recognized object and a category corresponding to each keyword by analyzing the recognized object. In this case, the category may include at least one of a category classifying a scene, a category classifying a mood, a category classifying a type of object, a category indicating that at least a portion of an object may be changed to a past state, and a category indicating that at least a portion of an object may be changed to a future state.

In operation 312, the electronic device 100 may extract keywords through an artificial intelligence model. In this case, the artificial intelligence model to be used may extract keywords in text form from the first image by utilizing a transformer-based deep learning model (e.g., a model such as Clip, blip, and Vit).

Then, in operation 314, the electronic device 100 may display a plurality of keywords related to the object included in the first image. In operation 314, when displaying the plurality of keywords, the electronic device 100 may classify and display keywords related to the recognized object around the recognized object.

Then, in operation 314, the electronic device 100 may select a plurality of keywords to be displayed on the first image from among the extracted keywords. In this case, it may be possible to select the plurality of keywords by considering at least one of information regarding user preference, information regarding keyword usage frequency, and information regarding preset keyword priority. The artificial intelligence model used to select the plurality of keywords may utilize a deep learning model such as a transformer and a CNN.

In addition, in operation 314, the electronic device 100 may display a registered preferred keyword together with the plurality of keywords. In this case, a preferred keyword may be a keyword that is registered in advance and preferred by a user, a preset number of keywords selected in order of frequency among previously selected keywords, or a keyword that is selected more than a preset number of times among previously selected keywords.

Then, in operation 316, the electronic device 100 may determine whether a request for changing the plurality of displayed keywords is received. In this case, a request for changing the plurality of displayed keywords may be received when a keyword reset button displayed on a touchscreen is selected by a user input or when a keyword reset menu is selected through a selection menu.

When the request for changing the plurality of displayed keywords is received as a result of determination in operation 316, the process may return to operation 312 and a series of operations may be performed. That is, when receiving the request for changing the plurality of displayed keywords in operation 316, the electronic device 100 may return to operation 312 to analyze the image to re-extract keywords and may re-select a plurality of keywords to be displayed from among the re-extracted keywords in operation 314.

When the request for changing the plurality of displayed keywords is not received as a result of determination in operation 316, in operation 318, the electronic device 100 may determine whether a selected keyword reflected in the generation of the second image, which is an artificial intelligence image, is received from among the plurality of displayed keywords. In operation 318, it may be possible to determine whether a keyword is selected in response to a user touch input on the plurality of keywords displayed on the display.

As a result of the determination in operation 318, when, from among the plurality of displayed keywords, a keyword that is to be reflected in generation of the second image is not selected and not received, the process may return to operation 316 and a series of operations may be performed.

As a result of the determination in operation 318, when, from among the plurality of displayed keywords, a keyword that is to be reflected in generation of the second image is selected and received, in operation 320, the electronic device 100 may generate the second image, which is an artificial intelligence image, based on the selected keyword.

In operation 320, the electronic device 100 may generate a prompt based on the selected keyword to generate the second image and generate the second image by inputting the generated prompt to an artificial intelligence model for generating the second image. In this case, the artificial intelligence model used to generate the prompt may utilize a deep learning model that is based on a transformer and trained for the corresponding purpose. The artificial intelligence model for generating the second image may utilize a model such as a diffusion model and a generative adversarial network (GAN).

For example, when the keywords "Full Moon," "Mountain," "Aurora," and "remove clouds" extracted from a photo of clouds floating in a night sky with a crescent moon are selected, the electronic device 100 may generate a sentence-style prompt, such as "There is a mountain, a full moon rising above the mountain, and a cloudless sky with an aurora visible alongside the full moon."

Then, in operation 322, the electronic device 100 may determine whether a request for changing the selected keywords is received.

As a result of the determination in operation 322, when the request for changing the selected keywords is received, in operation 324, the electronic device 100 may overlay a plurality of keywords on the second image, return to operation 316, and perform a series of operations.

As a result of the determination in operation 322, when the request for changing the selected keywords is not received, the electronic device 100 may determine whether a request for generating a third image, which is a final artificial intelligence image, is received in operation 326. In this case, the second image may be a kind of preview image generated to quickly check a request from a user before generating the third image. Therefore, the second image may be a low-resolution image, and the third image may be a high-resolution image compared to the second image.

As a result of the determination in operation 326, when the request for generating the third image is not received, the electronic device 100 may proceed to operation 330 and perform subsequent operations.

As a result of the determination in operation 326, when the request for generating the third image is received, the electronic device 100 may transmit, to the artificial intelligence server 150, which is an external artificial intelligence server, the second image, metadata of the second image, the selected keywords, and a request for generating the third image and may receive the third image from the artificial intelligence server 150, in operation 328. In this case, the third image generated by the artificial intelligence server 150 may have a higher resolution than the second image generated by the electronic device 100.

Then, when receiving a request for storing the second image or the third image in operation 330, the electronic device 100 may store the second image or the third image with corresponding metadata in operation 332. In this case, the metadata of the second image or the third image may include at least one of information regarding the first image, which is source data used to generate the second image or the third image (for example, the metadata information of the first image may include information regarding the time at which the first image is captured, information regarding the location at which the first image is captured, information regarding the owner of the first image, and information regarding the size of the first image), information regarding an object included in the second image or the third image, extracted keywords, a plurality of displayed keywords, a selected keyword, and information regarding a category corresponding to each keyword.

In addition, in operation 312, the electronic device 100 may identify and recognize an object included in the first image, when a person exists in the recognized object, determine whether the recognized object is a person stored in the memory, and when the recognized object is the person stored in the memory, may extract keywords related to the past or future of the person. Then, in operation 320, when the selected keyword includes a keyword related to the past or future of the person, it may be possible to generate an artificial intelligence image by considering information regarding the person stored in the memory or an image of the person.

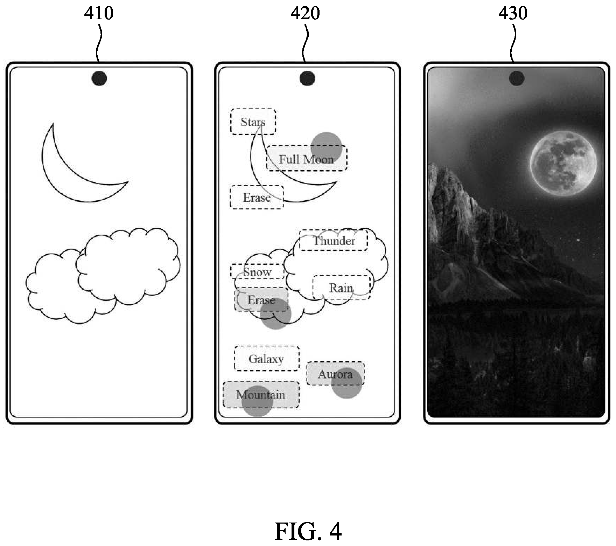

FIG. 4 is a diagram illustrating an example of generating an artificial intelligent image by selecting a keyword, according to an embodiment.

Referring to FIG. 4, when a user selects a first image in which a moon and clouds are floating in a night sky as shown in a first illustration 410 and issues a prompt generation command (e.g., input of a capturing button, a voice command, or selection of a prompt generation menu) to generate a second image, the electronic device 100 may extract keywords by analyzing at least one object in the first image and select, from among the extracted keywords, a plurality of keywords to be displayed on the first image to display the plurality of selected keywords on a screen as shown in a second illustration 420. In this case, the extracted keywords may be generated through analysis of metadata or analysis of an object included in the first image.

Using keywords (Full Moon, Erase, Mountain, and Aurora) selected by a user from among the plurality of displayed keywords, as shown in the second illustration 420, the electronic device 100 may generate a prompt.

For example, as shown in the second illustration 420, the electronic device 100 may generate words related to a moon, such as "Stars" and "Full Moon", as a plurality of keywords to be displayed and display the generated words near the moon. In addition, the electronic device 100 may include, as part of the plurality of keywords to be displayed, a word such as "Erase" to ask a user to determine whether to erase a corresponding object. Furthermore, the electronic device 100 may analyze the mood of the night sky and include, as part of the plurality of keywords to be displayed, words such as "Galaxy" and "Aurora," which may be added.

Additionally, based on keywords selected by the user from among the plurality of displayed keywords, the electronic device 100 may generate a prompt. For example, when the user selects "Full Moon" from among the plurality of keywords near the moon, "Erase" near the cloud, and "Mountain" and "Aurora" in the margin, a prompt (for example, "Full moon over the mountain with aurora") related to the selected keywords may be generated and this prompt may be displayed on the display.

Based on the generated prompt and the first image corresponding to the first illustration 410, the electronic device 100 may generate a second image, which corresponds to an artificial intelligence image and a third illustration 430. Alternatively, the electronic device 100 may transmit the generated prompt and the first image corresponding to the first illustration 410 to the artificial intelligence server 150, which is an externally located generative artificial intelligence server, and may receive the second image corresponding to the third illustration 430, which is an artificial intelligence image, from the artificial intelligence server 150, and may display the second image.

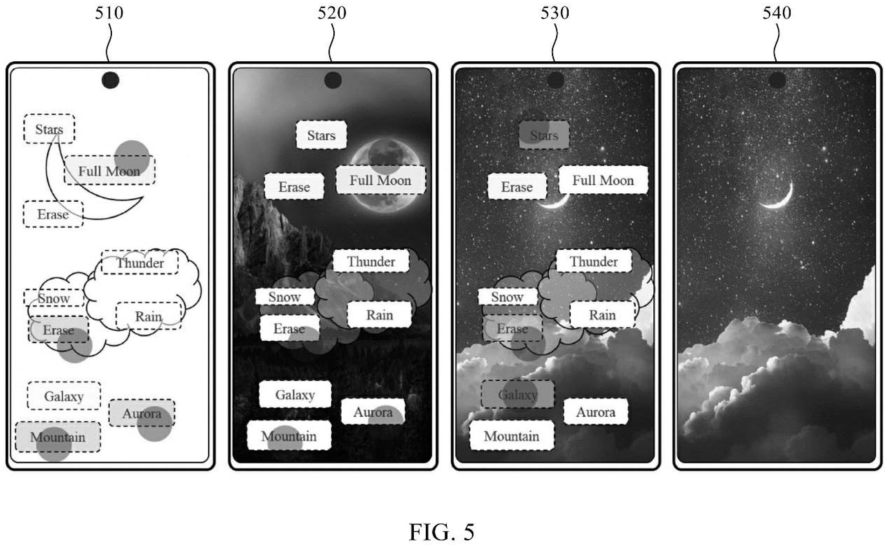

FIG. 5 is a diagram illustrating an example of generating an artificial intelligent image by changing a selected keyword, according to an embodiment.

Referring to FIG. 5, a first illustration 510 shows an example in which a plurality of keywords related to an object is displayed around the object or as an overlay on the object, and keywords selected by a user from among the plurality of keywords are displayed.

A second illustration 520 shows a second image, which is an artificial intelligence image generated based on the keywords selected in the first illustration 510, on which a plurality of keywords and the selected keywords are overlaid. A user may easily change the selected keywords. In this case, the selected keywords may be "Full Moon," "Erase" overlaid on the clouds, "Mountain," and "Aurora."

When the keywords selected in the second illustration 520 are changed, the second image is changed. A third illustration 530 is a (2-1)-th image, which is a changed artificial intelligence image, on which a plurality of keywords and the changed selected keywords are overlaid. In this case, the selected keywords may be "Stars," "Erase" overlaid on the clouds, and "Galaxy."

A fourth illustration 540 is a third image, which is a final artificial intelligence image, generated based on the (2-1)-th image generated in the third illustration 530. In this case, the third image may be generated through the artificial intelligence server 150.

In this case, the second image in the second illustration 520 and the (2-1)-th image in the third illustration 530 may be low-resolution images, and the third image generated in the fourth illustration 540 may be a high-resolution image.

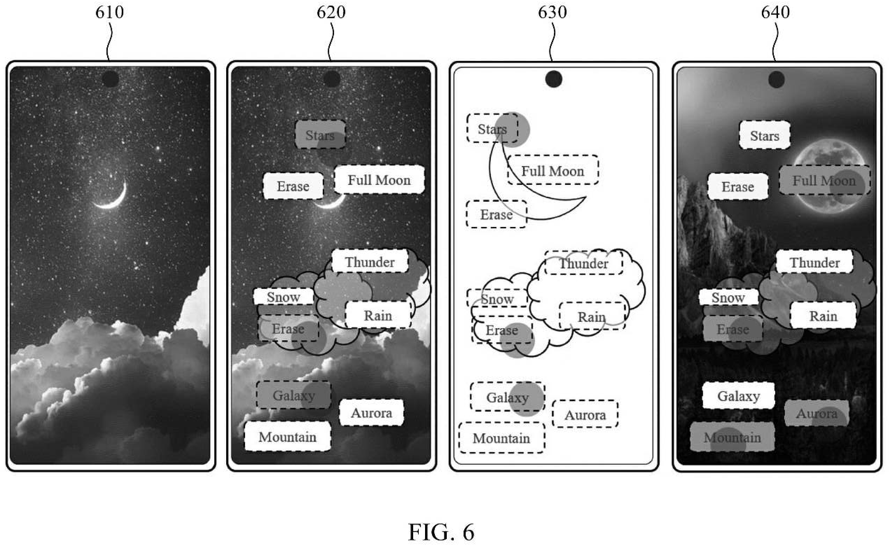

FIG. 6 is a diagram illustrating an example of modifying an artificial intelligence image by loading a stored artificial intelligence image and changing a selected keyword, according to an embodiment.

Referring to FIG. 6, a first illustration 610 may be displayed to modify an artificial intelligence image (e.g., the third image of FIG. 5) stored in the electronic device 100.

A second illustration 620 shows an example of displaying, using metadata of the third image in the first illustration 610, a plurality of keywords and selected keywords. In this case, the plurality of displayed keywords may be "Stars," "Erase" overlaid on the moon, "Full Moon," "Snow," "Thunder," "Rain," "Erase" overlaid on the clouds, "Galaxy," "Mountain," and "Aurora." In addition, the keywords selected from among the plurality of keywords may be "Stars," "Erase" overlaid on the clouds, and "Galaxy." These selected keywords may be indicated as selected to be distinguished from unselected keywords.

A third illustration 630 shows an example in which the third image is removed from the second illustration 620, an original image (e.g., the first image of FIG. 5) is restored, and the plurality of keywords and the selected keywords are displayed on the first image.

A fourth illustration 640 shows an example in which other keywords, which are not selected from among the plurality of keywords, are selected to generate a new artificial intelligence image, that is, a (2-2)-th image.

In other words, using the artificial intelligence image (e.g., the third image of FIG. 5) stored in the electronic device 100, the electronic device 100 according to various embodiments of the disclosure may easily perform modification.

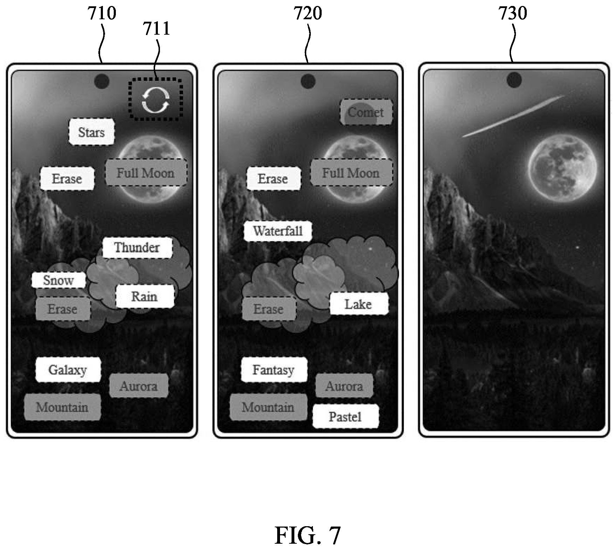

FIG. 7 is a diagram illustrating an example of re-extracting a keyword to generate an artificial intelligence image, according to an embodiment.

Referring to FIG. 7, a first illustration 710 shows an artificial intelligence image (e.g., the second image 520 of FIG. 5) on which a plurality of keywords and selected keywords are displayed. A keyword change request key 711 may be displayed on the artificial intelligence image so that the plurality of displayed keywords may be changed.

A second illustration 720 shows a case in which the keyword change request key 711 is input in the first illustration 710, the plurality of displayed keywords is changed, and new keywords are selected.

According to the second illustration 720, as the keyword change request key 711 is input, "Stars," "Snow," "Thunder, " "Rain," and "Galaxy" are removed from the plurality of previously displayed keywords, and "Comet," "Waterfall," "Lake," "Fantasy," and "Pastel" are added as a plurality of new keywords.

A third illustration 730 shows a (2-3)-th image, which is an artificial intelligence image generated when "Comet," "Full Moon," "Erase" overlaid on the clouds, "Mountain," and "Aurora" are selected from among the plurality of changed keywords in the second illustration 720.

In other words, when a user desires to change a plurality of displayed keywords, the electronic device 100 may change the plurality of displayed keywords through a reset button such as the keyword change request key 711.

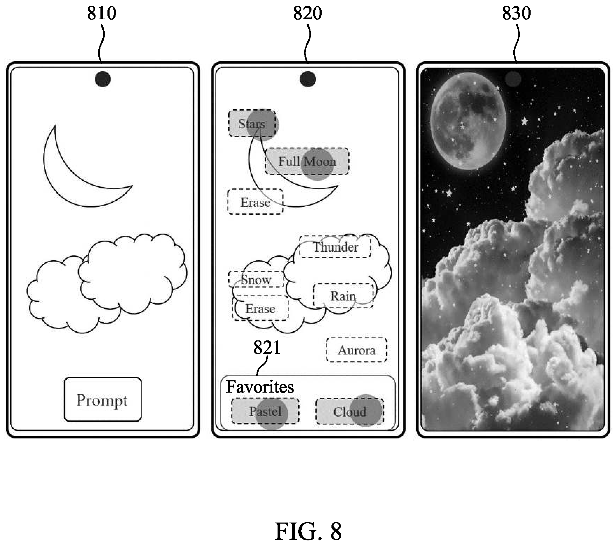

FIG. 8 is a diagram illustrating an example of generating an artificial intelligence image using a preferred keyword, according to an embodiment.

Referring to FIG. 8, a first illustration 810 is a first image, which is selected by a user and is an original image that serves as the source for generating an artificial intelligence image. In this case, the electronic device 100 may receive, from the user, an input for generating an artificial intelligence image by displaying a command to generate a prompt for generating an artificial intelligence image on the first image.

A second illustration 820 shows an example in which a plurality of keywords, preferred keywords, and selected keywords are displayed on the first illustration 810. In this case, when displaying a plurality of keywords, the electronic device 100 may display preferred keywords 821 (e.g., "Pastel" and "Cloud") in addition to the plurality of keywords and determine selected keywords among the plurality of keywords and the preferred keywords according to a selection of a user.

A third illustration 830 is a second image, which is an artificial intelligence image generated when "Stars," "Full Moon," "Pastel," and "Cloud" are determined as the selected keywords.

In other words, when providing a plurality of keywords to be displayed to generate an artificial intelligence image, the electronic device 100 may reduce the resetting of a plurality of keywords until keywords preferred by a user appear by providing the keywords preferred by the user. In this case, a preferred keyword may be a keyword that is registered in advance and preferred by a user, a preset number of keywords selected in order of frequency among previously selected keywords, or a keyword that is selected more than a preset number of times among previously selected keywords.

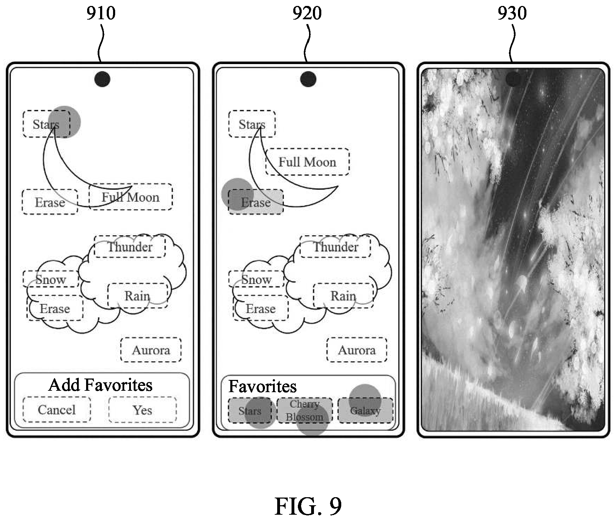

FIG. 9 is a diagram illustrating an example of generating an artificial intelligence image by registering and using a preferred keyword, according to an embodiment.

Referring to FIG. 9, a first illustration 910 shows an example in which a plurality of keywords is displayed on a first image, which is an original image that serves as the source for generating an artificial intelligence image, and preferred keywords are selected from among the plurality of keywords and registered.

A second illustration 920 shows an example in which the plurality of keywords, the preferred keywords, and selected keywords are displayed.

A third illustration 930 is a second image, which is an artificial intelligence image generated based on the plurality of keywords and the preferred keywords in the second illustration 920, wherein "Erase" overlaid on the moon, "Stars," "Cherry Blossom," and "Galaxy" are determined as the selected keywords.

In other words, the electronic device 100 may allow a user to add keywords preferred by the user among the plurality of keywords to a list of preferred keywords.

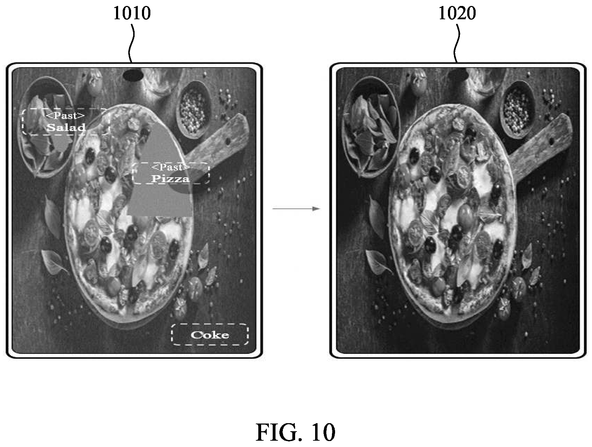

FIG. 10 is a diagram illustrating an example of generating an artificial intelligence image using a keyword included in a past category, according to an embodiment.

Referring to FIG. 10, a first illustration 1010 shows an example in which a plurality of keywords are overlaid on a first image, which is an original image, and keywords are selected by a user from among the plurality of keywords.

In this case, the first illustration 1010 may display, as the plurality of keywords, the past of "Salad" and the past of "Pizza" included in a past category.

A second illustration 1020 is a second image, which is an artificial intelligence image generated based on the past of "Salad" and the past of "Pizza" being determined as selected keywords.

Keywords may be categorized into several category types as described below. For example, keywords may include at least one of a category classifying a scene, a category classifying a mood, a category classifying the type of object, a category indicating that a change to the past is possible, and a category indicating that a change to the future is possible.

In FIG. 10, the past of "Salad" and the past of "Pizza" may be categories indicating that a change to the past is possible. When the past of "Salad" and the past of "Pizza" are determined as the selected keywords, the electronic device 100 may generate the second image in which the previously eaten salad and pizza are reverted to the past, uneaten state of the salad and pizza.

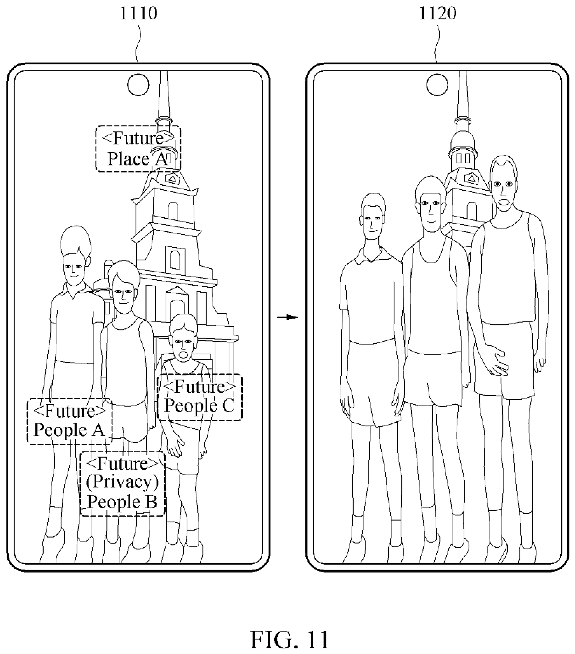

FIG. 11 is a diagram illustrating an example of generating an artificial intelligence image using a keyword included in a future category, according to an embodiment.

Referring to FIG. 11, a first illustration 1110 shows an example in which a plurality of keywords is overlaid on a first image, which is an original image, and keywords are selected by a user from among the plurality of keywords.

In this case, the future of "Place A," the future of "People A," the future of "People B," and the future of "People C" included in a future category may be displayed on the first illustration 1110 as the plurality of keywords.

A second illustration 1120 is a second image, which is an artificial intelligence image generated based on the future of "Place A," the future of "People A," the future of "People B," and the future of "People C" being determined as selected keywords.

In FIG. 11, the future of "Place A," the future of "People A," the future of "People B," the future of "People C" may be in a category indicating that a change to the future is possible. When the future of "Place A," the future of "People A," the future of "People B," and the future of "People C" are determined as selected keywords, the electronic device 100 may generate a second image showing People A, People B, and People C as adults, taken at Place A after time has passed, based on the image showing People A, People B, and People C taken during their childhood at Place A in the past.

In FIG. 11, when detecting that personal information related to People B (for example, a recent image or three-dimensional (3D) facial scan data of People B) is stored in the memory 140, the electronic device 100 may display "Privacy" as a keyword and may generate a future appearance of People B using the stored personal information of People B when generating the second image.

In other words, using stored personal information, the electronic device 100 may generate a future appearance.

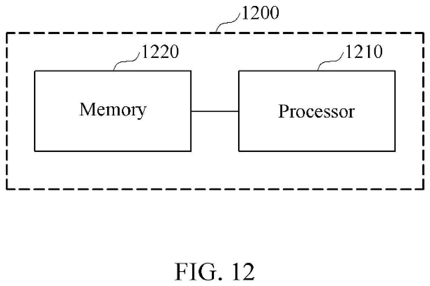

FIG. 12 is a diagram illustrating a schematic configuration of an electronic device for generating an artificial intelligence image based on a keyword, according to an embodiment.

Referring to FIG. 12, an electronic device 1200 may include a processor 1210 and memory 1220.

The memory 1220 may store an OS for controlling the overall operation of the electronic device 1200, an application program, and storage data. Additionally, according to the disclosure, the memory 1220 may store a first image, which is an original image, metadata of the first image, information regarding a preferred keyword, accumulated information regarding a selected keyword, a second image, which is an artificial intelligence image, metadata of the second image, a third image, which is a final artificial intelligence image, and metadata of the third image.

The processor 1210 may correspond to the processor 110 of the electronic device 100 of FIG. 1. In other words, the processor 1210 may include a component of the processor 110 of FIG. 1.

In response to a user input, the processor 1210 may display, on a display, the first image corresponding to an original image and a plurality of keywords related to an object included in the first image, receive at least one keyword selected from among the plurality of keywords, and based on at least a portion of the selected keyword and at least a portion of the first image, using an artificial intelligence model, generate a second image corresponding to an artificial intelligence image.

When receiving a request for storing the second image, the processor 1210 may generate metadata of the second image including at least a portion of the first image, information regarding an object included in the first image, extracted keywords, a plurality of keywords, selected keywords, or information regarding a category corresponding to each keyword, and store the second image and the metadata of the second image together in the memory 1210.

The processor 1210 may select.

When displaying the plurality of keywords, the processor 1210 may display a keyword related to an object around the object or as an overlay on the object.

When extracting keywords by analyzing the first image, the processor 1210 may identify and recognize an object included in the first image, when a person exists in the recognized object, determine whether the recognized object is a person stored in the memory, and when the recognized object is the person stored in the memory, extract keywords related to the past or future of the person.

When generating the second image based on at least a portion of the selected keywords and at least a portion of the first image, the processor 1210 may generate the second image by considering information regarding the person stored in the memory or an image of the person stored in the memory, when the selected keywords include keywords related to the past or future of the person.

The processor 1210 may perform the operations of FIG. 2 and FIG. 3. Therefore, a repeated detailed description of the processor 1210 is omitted.

FIG. 13 is a block diagram of an electronic device in a network environment according to an embodiment.

Referring to FIG. 13, an electronic device 1301 in a network environment 1300 may communicate with an electronic device 1302 via a first network 1398 (e.g., a short-range wireless communication network), or at least one of an electronic device 1304 or a server 1308 via a second network 1399 (e.g., a long-range wireless communication network). According to an embodiment, the electronic device 1301 may communicate with the electronic device 1304 via the server 1308. According to an embodiment, the electronic device 1301 may include a processor 1320, memory 1330, an input module 1350, a sound output module 1355, the display module 1360, an audio module 1370, a sensor module 1376, an interface 1377, a connecting terminal 1378, a haptic module 1379, a camera module 1380, a power management module 1388, a battery 1389, the communication module 1390, a subscriber identification module (SIM) 1396, or an antenna module 1397. In an embodiment, at least one of the components (e.g., the connecting terminal 1378) may be omitted from the electronic device 1301, or one or more other components may be added to the electronic device 1301. In an embodiment, some of the components (e.g., the sensor module 1376, the camera module 1380, or the antenna module 1397) may be implemented as a single component (e.g., the display module 1360).

The processor 1320 may execute, for example, software (e.g., a program 1340) to control at least one other component (e.g., a hardware or software component) of the electronic device 1301 coupled with the processor 1320, and may perform various data processing or computation. According to an embodiment, as at least part of the data processing or computation, the processor 1320 may store a command or data received from another component (e.g., the sensor module 1376 or the communication module 1390) in volatile memory 1332, process the command or the data stored in the volatile memory 1332, and store resulting data in non-volatile memory 1334.

In addition, the processor 1320 may perform an operation of the processor 110 of FIG. 1 or an operation of the processor 1210 of FIG. 12.

According to an embodiment, the processor 1320 may include a main processor 1321 (e.g., a central processing unit (CPU) or an application processor (AP)), or an auxiliary processor 1323 (e.g., a graphics processing unit (GPU), a neural processing unit (NPU), an image signal processor (ISP), a sensor hub processor, or a communication processor (CP)) that is operable independently from, or in conjunction with, the main processor 1321. For example, when the electronic device 1301 includes the main processor 1321 and the auxiliary processor 1323, the auxiliary processor 1323 may be adapted to consume less power than the main processor 1321, or to be specific to a specified function. The auxiliary processor 1323 may be implemented as separate from, or as part of the main processor 1321.

The auxiliary processor 1323 may control at least some of functions or states related to at least one component (e.g., the display module 1360, the sensor module 1376, or the communication module 1390) among the components of the electronic device 1301, instead of the main processor 1321 while the main processor 1321 is in an inactive (e.g., sleep) state, or together with the main processor 1321 while the main processor 1321 is in an active state (e.g., executing an application). According to an embodiment, the auxiliary processor 1323 (e.g., an ISP or a CP) may be implemented as part of another component (e.g., the camera module 1380 or the communication module 1390) functionally related to the auxiliary processor 1323. According to an embodiment, the auxiliary processor 1323 (e.g., the NPU) may include a hardware structure specified for artificial intelligence model processing. An artificial intelligence model may be generated by machine learning. Such learning may be performed, e.g., by the electronic device 1301 where the artificial intelligence is performed or via a separate server (e.g., the server 1308). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a CNN, a recurrent neural network (RNN), a restricted Boltzmann machine (RBM), a deep belief network (DBN), a bidirectional recurrent deep neural network (BRDNN), a deep Q-network or a combination of two or more thereof but is not limited thereto. The artificial intelligence model may, additionally or alternatively, include a software structure other than the hardware structure.

The memory 1330 may store various data used by at least one component (e.g., the processor 1320 or the sensor module 1376) of the electronic device 1301. The various data may include, for example, software (e.g., the program 1340) and input data or output data for a command related thereto. The memory 1330 may include the volatile memory 1332 or the non-volatile memory 1334.

In addition, the memory 1330 may serve as the memory 140 of FIG. 1 or the memory 1220 of FIG. 12.

The program 1340 may be stored in the memory 1330 as software, and may include, for example, an OS 1342, middleware 1344, or an application 1346.

The input module 1350 may receive a command or data to be used by another component (e.g., the processor 1320) of the electronic device 1301, from the outside (e.g., a user) of the electronic device 1301. The input module 1350 may include, for example, a microphone, a mouse, a keyboard, a key (e.g., a button), or a digital pen (e.g., a stylus pen).

The sound output module 1355 may output sound signals to the outside of the electronic device 1301. The sound output module 1355 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1360 may visually provide information to the outside (e.g., a user) of the electronic device 1301. The display module 1360 may include, for example, a display, a hologram device, or a projector and control circuitry to control a corresponding one of the display, hologram device, and projector. According to an embodiment, the display module 1360 may include a touch sensor adapted to detect a touch, or a pressure sensor adapted to measure the intensity of force incurred by the touch. In this case, the display module 1360 may serve as the display 130 of FIG. 1.

The audio module 1370 may convert a sound into an electrical signal and vice versa. According to an embodiment, the audio module 1370 may obtain the sound via the input module 1350, or output the sound via an external electronic device (e.g., the electronic device 1302) (e.g., a speaker or headphones) directly (e.g., wiredly) or wirelessly coupled with the electronic device 1301.

The sensor module 1376 may detect an operational state (e.g., power or temperature) of the electronic device 1301 or an environmental state (e.g., a state of a user) external to the electronic device 1301, and then generate an electrical signal or data value corresponding to the detected state. According to an embodiment, the sensor module 1376 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1377 may support one or more specified protocols to be used for the electronic device 1301 to be coupled with the external electronic device (e.g., the electronic device 1302) directly (e.g., wiredly) or wirelessly. According to an embodiment, the interface 1377 may include, for example, a high definition multimedia interface (HDMI), a universal serial bus (USB) interface, a secure digital (SD) card interface, or an audio interface.

The connecting terminal 1378 may include a connector via which the electronic device 1301 may be physically connected with the external electronic device (e.g., the electronic device 1302). According to an embodiment, the connecting terminal 1378 may include, for example, an HDMI connector, a USB connector, an SD card connector, or an audio connector (e.g., a headphone connector).

The haptic module 1379 may convert an electrical signal into a mechanical stimulus (e.g., a vibration or a movement) or electrical stimulus which may be recognized by a user via his tactile sensation or kinesthetic sensation. According to an embodiment, the haptic module 1379 may include, for example, a motor, a piezoelectric element, or an electric stimulator.

The camera module 1380 may capture a still image or moving images. According to an embodiment, the camera module 1380 may include one or more lenses, image sensors, ISPs, or flashes.

The power management module 1388 may manage power supplied to the electronic device 1301. According to an embodiment, the power management module 1388 may be implemented as at least part of, for example, a power management integrated circuit (PMIC).

The battery 1389 may supply power to at least one component of the electronic device 1301. According to an embodiment, the battery 1389 may include, for example, a primary cell which is not rechargeable, a secondary cell which is rechargeable, or a fuel cell.

The communication module 1390 may support establishing a direct (e.g., wired) communication channel or a wireless communication channel between the electronic device 1301 and the external electronic device (e.g., the electronic device 1302, the electronic device 1304, or the server 1308) and performing communication via the established communication channel. The communication module 1390 may include one or more CPs that are operable independently from the processor 1320 (e.g., the AP) and support a direct (e.g., wired) communication or a wireless communication. According to an embodiment, the communication module 1390 may include a wireless communication module 1392 (e.g., a cellular communication module, a short-range wireless communication module, or a global navigation satellite system (GNSS) communication module) or a wired communication module 1394 (e.g., a local area network (LAN) communication module or a power line communication (PLC) module). A corresponding one of these communication modules may communicate with the external electronic device via the first network 1398 (e.g., a short-range communication network, such as Bluetooth^{™}, wireless-fidelity (Wi-Fi) direct, or infrared data association (IrDA)) or the second network 1399 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multiple components (e.g., multiple chips) separate from each other. The wireless communication module 1392 may identify and authenticate the electronic device 1301 in a communication network, such as the first network 1398 or the second network 1399, using subscriber information (e.g., international mobile subscriber identity (IMSI)) stored in the SIM 1396. The communication module 1390 may serve as the communicator 120 of FIG. 1.

The wireless communication module 1392 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1392 may support a high-frequency band (e.g., the mmWave band) to achieve, e.g., a high data transmission rate. The wireless communication module 1392 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1392 may support various requirements specified in the electronic device 1301, an external electronic device (e.g., the electronic device 1304), or a network system (e.g., the second network 1399). According to an embodiment, the wireless communication module 1392 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 1397 may transmit or receive a signal or power to or from the outside (e.g., the external electronic device) of the electronic device 1301. According to an embodiment, the antenna module 1397 may include an antenna including a radiating element composed of a conductive material or a conductive pattern formed in or on a substrate (e.g., a printed circuit board (PCB)). According to an embodiment, the antenna module 1397 may include a plurality of antennas (e.g., array antennas). In such a case, at least one antenna appropriate for a communication scheme used in the communication network, such as the first network 1398 or the second network 1399, may be selected, for example, by the communication module 1390 from the plurality of antennas. The signal or the power may then be transmitted or received between the communication module 1390 and the external electronic device via the selected at least one antenna. According to an embodiment, another component (e.g., a radio frequency integrated circuit (RFIC)) other than the radiating element may be additionally formed as part of the antenna module 1397.

According to an embodiment, the antenna module 1397 may form a mmWave antenna module. According to an embodiment, the mmWave antenna module may include a PCB, an RFIC disposed on a first surface (e.g., the bottom surface) of the PCB, or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1301 and the external electronic device 1304 via the server 1308 coupled with the second network 1399. Each of the electronic devices 1302 or 1304 may be a device of a same type as, or a different type, from the electronic device 1301. According to an embodiment, all or some of operations to be executed at the electronic device 1301 may be executed at one or more of the external electronic devices 1302, 1304, or 1308. For example, if the electronic device 1301 should perform a function or a service automatically, or in response to a request from a user or another device, the electronic device 1301, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1301. The electronic device 1301 may provide the outcome, with or without further processing of the outcome, as at least part of a reply to the request. To that end, cloud computing, distributed computing, mobile edge computing (MEC), or client-server computing technology may be used, for example. The electronic device 1301 may provide ultra low-latency services using, e.g., distributed computing or mobile edge computing. In another embodiment, the external electronic device 1304 may include an Internet-of-Things (IoT) device. The server 1308 may be an intelligent server using machine learning and/or a neural network. According to an embodiment, the external electronic device 1304 or the server 1308 may be included in the second network 1399. The electronic device 1301 may be applied to intelligent services (e.g., smart home, smart city, smart car, or healthcare) based on 5G communication technology or IoT-related technology.

The electronic device according to an embodiment of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in a form of an application-specific integrated circuit (ASIC).

An embodiment of the disclosure as set forth herein may be implemented as software (e.g., the program 1340) including one or more instructions that are stored in a storage medium (e.g., internal memory 1336 or external memory 1338) that is readable by a machine (e.g., the electronic device 1301). For example, a processor (e.g., the processor 1320) of the machine (e.g., the electronic device 1301) may invoke at least one of the one or more instructions stored in the storage medium, and execute it, with or without using one or more other components under the control of the processor. This allows the machine to be operated to perform at least one function according to the at least one instruction invoked. The one or more instructions may include code generated by a compiler or code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

According to an embodiment, an electronic device 100, 1200, or 1300 may include a display 130 or 1360, memory 140 or 1330, and a processor 110, 1210, or 1320, wherein the processor may be configured to, in response to a user input, display, on the display 130 or 1360, a first image corresponding to an original image, extract keywords by analyzing the first image, display a plurality of keywords related to an object included in the first image, receive at least one keyword that is selected from among the plurality of keywords, and based on at least a portion of the selected keyword and at least a portion of the first image, generate, using an artificial intelligence model, a second image corresponding to an artificial intelligence image.

According to an embodiment, when receiving a request for storing the second image, the processor 110, 1210, or 1320 may be configured to generate metadata of the second image including at least a portion of the first image, information regarding the object included in the first image, the extracted keywords, the plurality of keywords, the selected keyword, or information regarding a category corresponding to each keyword and store the second image together with the metadata of the second image in the memory 140 or 1330.

According to an embodiment, the processor 110, 1210, or 1320 may be configured to, when displaying the plurality of keywords, select the plurality of keywords to be displayed from among the extracted keywords by considering at least one of user preference information, keyword usage frequency information, and preset keyword priority information in the memory 140 or 1330.

According to an embodiment, the processor 110, 1210, or 1320 may be configured to, when displaying the plurality of keywords, display a keyword related to the object either around the object or as an overlay on the object.

According to an embodiment, the processor 110, 1210, or 1320 may be configured to, when extracting the keywords by analyzing the first image, identify and recognize an object included in the first image, when a person exists in the recognized object, determine whether the recognized object corresponds to a person stored in the memory, and when the recognized object is a person stored in the memory 140 or 1330, extract a keyword related to past or future of the person.

According to an embodiment, the processor 110, 1210, or 1320 may be configured to, when generating the second image, based on at least a portion of the selected keyword and at least a portion of the first image, generate the second image by considering information regarding the person stored in the memory or an image of the person stored in the memory 140 or 1330, when the selected keyword includes a keyword related to past or future of the person.

According to an embodiment, a method of generating an artificial intelligence image may include, in response to a user input, displaying a first image corresponding to an original image, extracting keywords by analyzing the first image, displaying a plurality of keywords related to an object included in the first image, receiving at least one keyword that is selected from among the plurality of keywords, and based on at least a portion of the selected keyword and at least a portion of the first image, generating, using an artificial intelligence model, a second image corresponding to an artificial intelligence image.

According to an embodiment, the extracting of the keywords by analyzing the first image may include analyzing metadata corresponding to the first image, wherein the metadata may include at least one of information regarding a time at which the first image is captured, information regarding a location at which the first image is captured, information regarding an owner of the first image, information regarding a size of the first image, information regarding an object included in the first image, the extracted keywords, the plurality of keywords, the selected keyword, and information regarding a category corresponding to each keyword.

According to an embodiment, the method may further include, when receiving a request for storing the second image, generating metadata of the second image including at least a portion of the first image, information regarding an object included in the first image, the extracted keywords, the plurality of keywords, the selected keyword, or information regarding a category corresponding to each keyword and storing the second image together with the metadata of the second image.

According to an embodiment, the displaying of the plurality of keywords related to the object included in the first image may include selecting the plurality of keywords to be displayed from among the extracted keywords by considering at least one of user preference information, keyword usage frequency information, and preset keyword priority information.

According to an embodiment, the displaying of the plurality of keywords related to the object included in the first image may include displaying a keyword related to the object either around the object or as an overlay on the object.

According to an embodiment, the method may further include, when receiving a request for changing the selected keyword, generating a new second image according to the changed keyword.

According to an embodiment, the method may further include, when receiving an input for generating a third image corresponding to a final artificial intelligence image, generating the third image using an external artificial intelligence server, wherein the third image may have a higher resolution than the second image.

According to an embodiment, the method may further include, when receiving a request for changing the plurality of keywords, re-extracting the keywords by analyzing at least a portion of the first image and metadata of the first image and re-selecting the plurality of keywords from among the re-extracted keywords.

According to an embodiment, the displaying of the plurality of keywords related to the object included in the first image may include displaying a preferred keyword registered together with the plurality of keywords.

According to an embodiment, the preferred keyword may be a keyword that is registered in advance and preferred by a user, a preset number of keywords arranged in descending order of selection frequency from among previously selected keywords, or a keyword, among the previously selected keywords, having a selection frequency equal to or greater than a preset number of times.

According to an embodiment, the extracting of the keywords by analyzing the first image may include identifying and recognizing an object included in the first image and extracting keywords corresponding to the recognized object and a category corresponding to each keyword by analyzing the recognized object, wherein the category may include at least one of a category classifying a scene, a category classifying a mood, a category classifying a type of object, a category indicating that a change to past is possible, or a category indicating that a change to future is possible.

According to an embodiment, the extracting of the keywords by analyzing the first image may include identifying and recognizing an object included in the first image, when a person exists in the recognized object, determining whether the recognized object is a person stored in memory, and when the recognized object is a person stored in the memory, extracting a keyword related to past or future of the person.

According to an embodiment, the generating of the second image, based on at least a portion of the selected keyword and at least a portion of the first image, may include generating the second image by considering information regarding the person stored in the memory or an image of the person stored in the memory, when the selected keyword includes a keyword related to past or future of the person.

The method according to the embodiments described above may be recorded in non-transitory computer-readable storage media including program instructions to implement various operations of the embodiments described above. The media may also include, alone or in combination with the program instructions, data files, data structures, and the like. The program instructions recorded on the media may be those specially designed and constructed for the purposes of examples, or they may be of the kind well-known and available to those having skill in the computer software arts. Examples of non-transitory computer-readable storage media include magnetic media such as hard disks, floppy disks, and magnetic tape; optical media such as CD-ROM discs and digital video discs (DVDs); magneto-optical media such as floptical disks; and hardware devices that are specifically configured to store and perform program instructions, such as ROM, random access memory (RAM), flash memory, and the like. Examples of program instructions include both machine code, such as produced by a compiler, and files containing higher-level code that may be executed by the computer using an interpreter. The hardware devices described above may be configured to act as one or more software modules in order to perform the operations of the embodiments, or vice versa.

Software may include a computer program, a piece of code, an instruction, or one or more combinations thereof, to independently or collectively instruct or configure a processing device to operate as desired. Software and data may be stored in any type of machine, component, physical or virtual equipment, or computer storage medium or device capable of providing instructions or data to or being interpreted by the processing device. The software may also be distributed over network-coupled computer systems so that the software is stored and executed in a distributed fashion. The software and data may be stored by one or more computer-readable storage mediums.

While the embodiments are described with reference to the drawings, it will be apparent to one of ordinary skill in the art that various alterations and modifications in form and details may be made in these embodiments without departing from the spirit and scope of the claims and their equivalents. For example, suitable results may be achieved if the described techniques are performed in a different order, and/or if components in a described system, architecture, device, or circuit are combined in a different manner, or replaced or supplemented by other components or their equivalents.

Therefore, other implementations, other embodiments, and equivalents to the claims are also within the scope of the following claims.

## Claims

1. An electronic device comprising:
a display;
memory; and
a processor,
wherein the processor is configured to
in response to a user input, display, on the display, a first image corresponding to an original image, extract keywords by analyzing the first image, display a plurality of keywords related to an object comprised in the first image, receive at least one keyword that is selected from among the plurality of keywords, and based on at least a portion of the selected keyword and at least a portion of the first image, generate, using an artificial intelligence model, a second image corresponding to an artificial intelligence image.

2. The electronic device of claim 1, wherein, when receiving a request for storing the second image, the processor is configured to generate metadata of the second image comprising at least a portion of the first image, information regarding the object comprised in the first image, the extracted keywords, the plurality of keywords, the selected keyword, or information regarding a category corresponding to each keyword and store the second image together with the metadata of the second image in the memory.

3. A method of generating an artificial intelligence image, the method comprising:
in response to a user input, displaying a first image corresponding to an original image;
extracting keywords by analyzing the first image;
displaying a plurality of keywords related to an object comprised in the first image;
receiving at least one keyword that is selected from among the plurality of keywords; and
based on at least a portion of the selected keyword and at least a portion of the first image, generating, using an artificial intelligence model, a second image corresponding to an artificial intelligence image.

4. The method of claim 3, wherein the extracting of the keywords by analyzing the first image comprises analyzing metadata corresponding to the first image, wherein the metadata comprises at least one of information regarding a time at which the first image is captured, information regarding a location at which the first image is captured, information regarding an owner of the first image, information regarding a size of the first image, information regarding an object comprised in the first image, the extracted keywords, the plurality of keywords, the selected keyword, and information regarding a category corresponding to each keyword.

5. The method of any one of claims 3 and 4, further comprising:
when receiving a request for storing the second image, generating metadata of the second image comprising at least a portion of the first image, information regarding an object comprised in the first image, the extracted keywords, the plurality of keywords, the selected keyword, or information regarding a category corresponding to each keyword; and
storing the second image together with the metadata of the second image.

6. The method of any one of claims 3 to 5, wherein the displaying of the plurality of keywords related to the object comprised in the first image comprises selecting the plurality of keywords to be displayed from among the extracted keywords by considering at least one of user preference information, keyword usage frequency information, and preset keyword priority information.

7. The method of any one of claims 3 to 6, wherein the displaying of the plurality of keywords related to the object comprised in the first image comprises displaying a keyword related to the object either around the object or as an overlay on the object.

8. The method of any one of claims 3 to 7, further comprising:
when receiving a request for changing the selected keyword, generating a new second image according to the changed keyword.

9. The method of any one of claims 3 to 8, further comprising:
when receiving an input for generating a third image corresponding to a final artificial intelligence image, generating the third image using an external artificial intelligence server,
wherein the third image has a higher resolution than the second image.

10. The method of any one of claims 3 to 9, further comprising:
when receiving a request for changing the plurality of keywords, re-extracting the keywords by analyzing at least a portion of the first image and metadata of the first image and re-selecting the plurality of keywords from among the re-extracted keywords.

11. The method of any one of claims 3 to 10, wherein the displaying of the plurality of keywords related to the object comprised in the first image comprises displaying a preferred keyword registered together with the plurality of keywords.

12. The method of any one of claims 3 to 11, wherein the preferred keyword is
a keyword that is registered in advance and preferred by a user,
a preset number of keywords arranged in descending order of selection frequency from among previously selected keywords, or
a keyword, among the previously selected keywords, having a selection frequency equal to or greater than a preset number of times.

13. The method of any one of claims 3 to 12, wherein the extracting of the keywords by analyzing the first image comprises:
identifying and recognizing an object comprised in the first image; and
extracting keywords corresponding to the recognized object and a category corresponding to each keyword by analyzing the recognized object,
wherein the category comprises at least one of
a category classifying a scene,
a category classifying a mood,
a category classifying a type of object,
a category indicating that a change to past is possible, or
a category indicating that a change to future is possible.

14. The method of any one of claims 3 to 13, wherein the extracting of the keywords by analyzing the first image comprises:
identifying and recognizing an object comprised in the first image;
when a person exists in the recognized object, determining whether the recognized object is a person stored in memory; and
when the recognized object is a person stored in memory, extracting a keyword related to past or future of the person.

15. The method of any one of claims 3 to 14, wherein the generating of the second image, based on at least a portion of the selected keyword and at least a portion of the first image, comprises generating the second image by considering information regarding the person stored in the memory or an image of the person stored in the memory, when the selected keyword comprises a keyword related to past or future of the person.
